# EUROPÄISCHE PATENTSCHRIFT

(11) **EP 1 714 767 B1**
(45) Veröffentlichungstag und Bekanntmachung des Hinweises auf die Patenterteilung: **10.07.2013**
(21) Anmeldenummer: 06405123.8
(22) Anmeldetag: 21.03.2006
(51) Int. Cl.: B29C 44/34

(54) **Verfahren zum Herstellen von geschäumten Polymerformteilen aus Flüssigsilikon-Kautschuk**
Method of making foamed polymer articles of liquid silicon rubber
Procédé de production des articles en polymer moussé à partir de caoutchouc de silicone liquide

(30) Priorität: 19.04.2005 EP 05405300
(43) Veröffentlichungstag der Anmeldung: 25.10.2006
(73) Patentinhaber: Sulzer Chemtech AG, 8404 Winterthur (CH)
(72) Erfinder: Habibi-Naini, Sasan, Dr., 8486 Rikon (CH)
(74) Vertreter: Sulzer Management AG

(56) Entgegenhaltungen:
- EP-A- 0 635 549
- EP-A- 0 751 174
- EP-A- 1 094 091
- EP-A1- 0 593 863
- EP-A1- 0 722 975
- US-A1- 2004 132 890

## Beschreibung

Die Erfindung betrifft Anwendungen eines Verfahrens zum Herstellen von geschäumten Polymerformteilen aus Flüssigsilikon-Kautschuk. Die für dieses Polymer gebräuchliche Bezeichnung LSR ("Liquid Silicon Rubber") wird im Folgenden verwendet.

LSR ist ein Zweikomponenten-Polymersystem, dessen Komponenten einzeln nicht reaktionsfähig sind und das der Handel mit vorgebbar eingestellten Eigenschaften anbietet. Die LSR-Komponenten sind pastöse Massen. Sie werden mittels spezieller Pump-, Dosier- und Mischtechnik zu einer Formmasse vereinigt, die auf einer Spritzgiessmaschine zu Polymerformteilen verarbeitbar ist. LSR ist ein bei erhöhter Temperatur (bei rund 150 - 200 °C) vernetzender Silikonkautschuk, nämlich ein sogenannter "Hochtemperatur vernetzender Silikonkautschuk" (HTV-Silikonkautschuk). Die Vernetzungsreaktion des Polymers ist beispielsweise eine platinkatalysierte Additionsvernetzung, bei der ein Polysiloxan mit einem Vernetzer (bestehend aus kurzen Polymerketten) und unter dem Einfluss eines Pt-Katalysators reagiert. Der Vernetzer und der Katalysator sind partielle Mittel zur Durchführung der Vernetzungsreaktion, welche zwei Komponenten eines Vernetzungsmittels bilden.

Gegenüber herkömmlichen vernetzenden Kautschuken (synthetischen oder natürlichen) zeichnet sich LSR durch eine hohe Temperaturbeständigkeit aus sowie durch eine gute physiologische Verträglichkeit, womit sich eine Unbedenklichkeit hinsichtlich hygienischer Anforderungen ergibt. Die Medienbeständigkeit von LSR ist in der Regel zufriedenstellend; sie ist allerdings oft schlechter als bei Festkautschuken, beispielsweise wenn LSR mit Benzin, Fetten, Ölen oder Aromaten in Kontakt kommt.

Das Schäumen von Festsilikon und Verwenden dieses Materials als Formmasse ist bekannt ebenso wie aus der EP0751174 A1 die Verarbeitung von fluiden Organopolysiloxankomponenten. Die EP0751174 A1 beschreibt ein Verfahren zur Herstellung eines Silikonschaums, bestehend aus einem Basisfluid und einem Härtemittel, welche ein hohles Füllmaterial enthalten. Das hohle Füllmaterial besteht aus Mikrokugeln, die ein Gas enthalten. Das Basisfluid, das Härtemittel und das hohle Füllmaterial werden in einem Mischer mit einem Scher- und Rührwerk vermischt. Das Basisfluid und das Härtemittel werden miteinander vermischt, um eine Organosiloxanmischung auszubilden. Gleichzeitig wird das hohle Füllmaterial aufgebrochen, um das in dem hohlen Füllmaterial enthaltene Gas austreten zu lassen. Die Organosiloxanmischung wird über eine Austrittsdüse extrudiert und anschliessend geschäumt und ausgehärtet.

Es wird beim Festsilikon wie bei der klassischen Kautschukverarbeitung ein chemisches Treibmittel als Additiv verwendet. Eine Additivierung muss beim Festsilikon in einer Vorstufe durchgeführt werden, was erheblich zu Verarbeitungskosten beiträgt. Ausserdem sind Formherstell-Prozesse mit Festsilikon in der Regel nur teilweise automatisierbar, und die Lagerung von Festsilikon ist weniger einfach als jene von LSR.

Chemische Treibmittel haben bei LSR nicht zu einem Erfolg geführt, da der thermische Zerfall des Treibmittels erst im Werkzeug eintritt und die Vernetzungsreaktion des LSR viel zu schnell ist, als dass ein Schaum ausreichender Qualität entstehen könnte.

LSR ist ein sehr scher- und verweilzeitempfindliches Material. Daher werden in bekannten Spritzgiessprozessen Förderschnecken verwendet, die nur transportieren und nicht homogenisieren oder mischen. Bei bekannten Verfahren zum Schaumspritzgiessen von Thermoplasten (siehe z. B. EP-B-0952908) wird das Treibmittel punktuell an einer oder mehreren Bohrungen in die Einspritzeinheit zudosiert. Es muss dabei intensiv gemischt werden. Wenn man dieses Verfahren analog auf eine Verarbeitung von LSR anwendet, ergibt das intensive Mischen Scherungen, die in Stagnationszonen eine verfrühte Vernetzung einleiten. Der Prozess kommt so zum Erliegen. Versuche, das bekannte Verfahren beim LSR analog anzuwenden, haben daher nicht zum Erfolg geführt.

Eine batchweise Vorbeladung der LSR-Komponenten mit einem physikalischen Treibmittel ist bereits bekannt (siehe EP-A- 0 593 863). Dieses Verfahren eignet sich nicht zur Anwendung als Teilverfahren in Kombination mit dem Spritzgiessverfahren. Das Spritzgiessen wird quasikontinuierlich und damit weitgehend oder im Wesentlichen kontinuierlich durchgeführt (wobei die präparierte Formmasse intermittierend in das formgebende Werkzeug eingespritzt wird, beispielsweise in Zyklen von 20s). Trotz des batchweisen Vorgehens wäre zwar die Verfahrenskombination möglich, aber mit einem grossen Aufwand verbunden: Es wären sehr viel Zeit (gemäss EP-A-0 593 863 mindestens 2 Stunden) und entsprechend grosse Behältervolumina erforderlich. Die batchweise Vorbeladung ist daher nicht wirtschaftlich und somit industriell nicht umsetzbar.

Aus vielen Gründen würde das Schäumen von LSR wirtschaftliche Vorteile bringen. Die Werkstoffeigenschaften von LSR hängen teilweise von der Wahl der Rohstoffe ab. Ein Eigenschaftsspektrum von LSR kann aber von der Rohstoffseite her nur begrenzt eingestellt werden. Durch das Aufschäumen können neue Werkstoffeigenschaften erzeugt werden, mit denen sich neue Anwendungsgebiete erschliessen lassen. Weiterhin ermöglicht das Schäumen eine effizientere Rohstoffverwertung. Bauteile werden leichter, ein Materialeinsatz wirtschaftlicher.

Die in Frage kommenden Anwendungen sind denen geschäumter Festsilikone zwar ähnlich; allerdings haben physikalisch geschäumte Silikone, d.h. Polymerformteile aus LSR, zusätzlich folgende Vorteile:
- Einsteitung von Bauteileigenschaften über das Herstellverfahren und nicht durch einen besonderen Aufbereitungsschritt (analog zur Additivierung des chemischen Treibmittels bei den Festsilikonen);
- höhere Aufschäumgrade, da höhere Konzentrationen an physikalischem Treibmittel möglich sind;
- keine Beeinträchtigung von mechanischen und/oder physiologischen Eigenschaften durch Zersetzungsrückstände eines chemischen Treibmittels. Dadurch, dass keine Zersetzungsrückstände im Polymer verbleiben, kann beispielsweise eine höhere Weichheit erzielt werden.

Es ist also wünschenswert, physikalisch geschäumte Polymerformteile aus LSR herstellen zu können. Aus der DE-A- 198 53 021 ist ein Spritzgiessverfahren bekannt, mit dem geschäumte Polymerformteile herstellbar sind. Dieses Verfahren ist nach einer geeigneten Weiterentwicklung dazu anwendbar, auch geschäumte Formteile aus LSR

Dieses Verfahren zum Herstellen eines geschäumten Polymerkörpers aus der Formmasse LSR ist im Wesentlichen kontinuierlich (d.h. quasikontinuierlich). Die auf besondere Weise präparierte, nämlich mit physikalischem Treibmittel imprägnierte Formmasse wird in ein formgebendes Werkzeug eingespritzt. Dort erfolgt bei erhöhter Temperatur simultan die Vernetzungsreaktion und die Bildung von Schaumbläschen. Vor der Präparierung der Formmasse liegt diese in Form von zwei getrennt gehaltenen Komponenten vor, die jeweils partielle Mittel zur Durchführung der Vernetzungsreaktion enthalten und die sich durch diese partiellen Mittel unterscheiden. Die beiden Komponenten werden zu Beginn der Präparierung separat in zwei Strömen unter erhöhtem Druck gefördert. Dabei wird mindestens eine der Komponenten mit dem physikalischen Treibmittel imprägniert. Die beiden Ströme werden nach dem Imprägnieren - weiterhin unter erhöhtem Druck - zusammengeführt und dabei vermischt. Schliesslich wird das beim Mischen gebildete reaktive Gemisch dosiert und unter Absenkung des Drucks in eine Kavität des formgebenden Werkzeugs eingespritzt.

Aufgabe der Erfindung ist es, dieses weiterentwickelte und eine Erfindung darstellende Verfahren anzuwenden, um nützliche Polymerformteile aus geschäumtem LSR zu schaffen. Solche geschäumten Polymerformteile lassen sich mittels der im Anspruch 1 definierten Anwendung herstellen.

Durch das Verfahren ist ein Polymerformteil aus LSR herstellbar, das einen Aufschäumgrad von 5 bis 70 Volumenprozent aufweist und/oder dessen Shore-A-Härte in Bezug auf ein Polymerformteil aus nicht geschäumtem LSR um mindestens 10 % reduziert ist. Das hergestellte Polymerformteil bildet einen Körper, der bezüglich einer Wechselwirkung mit einem belebten Objekt oder mit einem weiteren unbelebten Objekt und bezüglich seinen physikalischen Eigenschaften zweckgerichtet ausgebildet ist.

Die abhängigen Ansprüche 2 bis 10 betreffen vorteilhafte Ausführungsformen der erfindungsgemäss hergestellten Polymerformteile.

Nachfolgend wird die Erfindung anhand der Zeichnungen erläutert. Es zeigen:
- Fig. 1: Blockschema einer Anlage, mit der das anzuwendende Verfahren durchführbar ist,
- Fig. 2: eine Imprägnierungs-Einrichtung, dargestellt als Längsschnitt bzw. Seitenansicht und
- Fig. 3: eine Zeichnung, angefertigt nach einer Mikroskopie-Aufnahme, die einen Schnitt durch geschäumtes LSR abbildet.

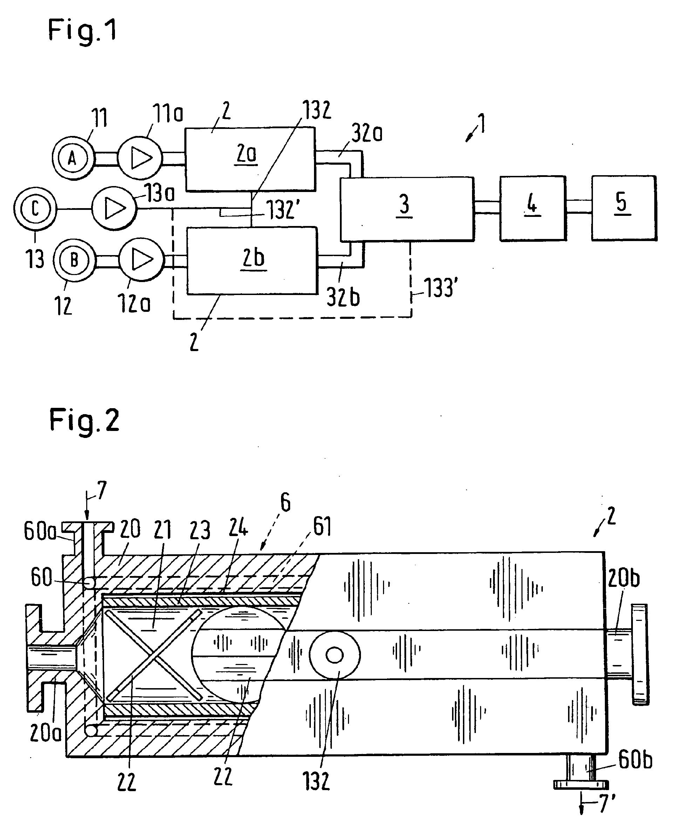

Eine Anlage 1, mit der sich das anzuwendende Verfahren durchführen lässt, ist in Fig. 1 als Blockschema dargestellt. Reservoire 11 und 12 für die Formmassen-Komponenten A und B sind über Pumpen 11a, 12a mit Imprägnierungs-Einrichtungen 2a bzw. 2b verbunden. (Es kann auch nur eine Imprägnierungs-Einrichtung vorgesehen sein.) Eine Ausführungsform 2 für die Imprägnierungs-Einrichtungen 2a, 2b wird anhand der Fig. 2 beschrieben. Mittels einer Spritzgiessmaschine, den Einrichtungen 2a, 2b sowie einer Mischeinrichtung 3 lassen sich die aufgabengemäss zu schaffenden Polymerkörper oder Polymerformteile herstellen. Das Schäumen findet in einem formgebenden Werkzeug 5 simultan mit der Vernetzungsreaktion statt. Die beiden Komponenten A und B (bzw. nur eine der Komponenten) werden mit einem physikalischen Treibfluid C imprägniert, das mit einer Pumpe 13a (oder Kompressor) aus einem Reservoir 13 durch eine Leitung 132' und Eintrittsstutzen 132 in die Imprägnierungs-Einrichtungen 2a, 2b eingespeist wird. Als Treibfluid C kann CO₂, N₂, eine Kohlenwasserstoffverbindung (z.B. Pentan) oder ein Gemisch der genannten Gase verwendet werden.

Nach dem Imprägnieren werden die Komponenten A und B durch Leitungen 32a, 32b in die Mischeinrichtung 3 gefördert, wo sie zusammen geführt und weiterhin unter erhöhtem Druck vermischt werden. Schliesslich wird das Gemisch unter Absenkung des Drucks in eine Kavität des formgebenden Werkzeugs 5 eingespritzt. Die Kavität wird zur Beschleunigung der Vernetzungsreaktion beheizt. An die Mischeinrichtung 3 schliesst eine Verbindungseinrichtung 4 an, die - nicht dargestellt - eine Dosiervorrichtung und eine Drosseldüse umfasst. Die Drosseldüse mündet in die Kavität des formgebenden Werkzeugs 5.

Die Imprägnierungs-Einrichtung 2 umfasst folgende Komponenten: Ein Gehäuse 20 zu einer zylindrischen Mischkammer 21, innerhalb der statische Mischerelemente 22 angeordnet sind, sowie Anschlussstutzen 20a, 20b für die zu imprägnierende Masse; ausserdem eine rohrförmige Wand 23 (oder Hülse 23) zwischen Gehäuse 20 und Mischkammer 21, die aus einem porösem Werkstoff (beispielsweise aus gesinterten Metallkörnern) hergestellt ist. Durch die Wand 23 ist das unter Druck einspeisbare Treibfluid C homogen über die Mantelfläche der Mischkammer 21 verteilbar. Das Treibfluid C, das durch den Stutzen 132 eingespeist wird, fliesst durch einen Ringspalt 24 tangential und axial über die äussere Oberfläche der rohrförmigen Wand 23.

Im Gehäuse 20 ist ein Kanalsystem 6 für ein Kühlmittel integriert (durch Pfeile 7, 7' angedeutet), mit dem beim Imprägnieren Wärme aus der durch die Mischerelemente 22 bearbeiteten Formmassen-Komponenten A bzw. B abführbar ist.

Durch das beschriebene Verfahren lässt sich ein Polymerformteil aus geschäumtem LSR herstellen, das einen Aufschäumgrad von 5 bis 70 Volumenprozent aufweist. Es lässt sich auch die Shore-Härte (Shore A) in Bezug auf ein Polymerformteil aus nicht geschäumtem LSR um mindestens 10 % reduzieren.

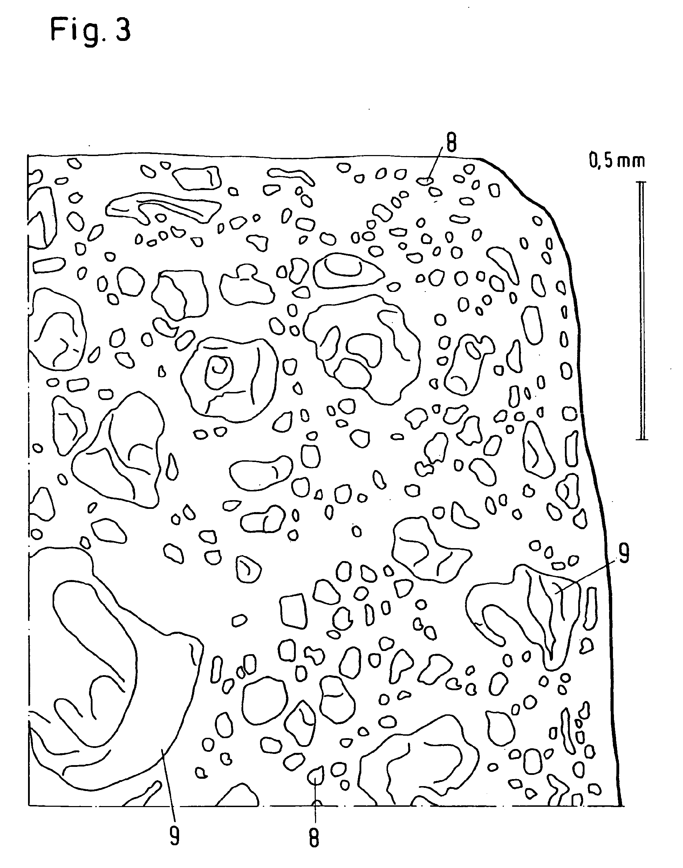

Die Fig. 3 zeigt eine Zeichnung, die nach einer Mikroskopie-Aufnahme angefertigt ist. Die Aufnahme bildet einen Schnitt durch eine Probe von geschäumtem LSR ab und zeigt Mikroporen 8 und Makroporen 9. Die dargestellte Schnittfläche ist ein bis zwei Quadratmillimeter gross. Von den Mikroporen 8 sind nur die Umrisse gezeichnet. Im Originalbild sieht man innerhalb der Umrisse verschiedene Schattierungen - nach Lage der Schnittebene in Bezug auf die Lage der Poren: dunkle Schattierung bei tiefen Poren, helle bei flachen Poren. Bei den Makroporen 9 sind auch innere, ohrmuschelartige Topographien angedeutet. Es ist in Fig. 3 eine Randpartie bei einer Ecke der Probe abgebildet. In einem Innenbereich der Probe nimmt die Dichte der Makroporen 9 zu. Sowohl durch Material- als auch Prozessoptimierung kann eine gleichmässigere Struktur, vorzugsweise eine mikrozelluläre Struktur, gewonnen werden. Mikrozellen sind Zellen - oben Poren genannt - mit einem Durchmesser kleiner als ungefähr 0.1 mm; ein Schaum mit mikrozellulärer Struktur ist ein Schaum mit Zellen, derer mittlerer Durchmesser (Zellgrösse) kleiner als 0.1 mm ist.

An der gezeigten wie auch an anderen Proben der gleichen Geometrie sind Härtemessungen (nach Shore A) vorgenommen worden. Es sind dabei Reduktionen der Härte gemessen worden, die in Abhängigkeit vom eingestellten Aufschäumgrad zwischen 22 und 65 % liegen. Der Aufschäumgrad kann als Dichtereduktion angegeben werden. Diese liegt bei der gezeigten Probe bei ca. 50 %.

Es sind verschiedene Anwendungsgebiete für Polymerformteil aus geschäumtem LSR möglich, bei denen sich eine verbesserte Wirtschaftlichkeit ergibt. Eventuell werden einzelne Anwendungen erst ermöglicht.

Das Polymerformteil ist beispielsweise ein Handgriff für ein Sport- oder Arbeitsgerät. Dabei vermitteln haptische Eigenschaften des geschäumten LSR ein den Tastsinn vorteilhaft stimulierendes Griffgefühl. Ein solches angenehmes Griffgefühl ist beispielsweise ein "Soft-Touch". Ausserdem sind die Reibeigenschaften der Griffoberfläche so modifizierbar, dass sie einen sicheren Halt für eine zugreifenden Hand ergeben.

Ein weiteres Ausführungsbeispiel ist eine medizinische Prothese oder ein medizinisches Implantat. Leichtere und weichere Implantate sowie Pads oder Schoner mit neuen Eigenschaften sind möglich: bessere Dämpfung, geringere Beeinträchtigung von umliegendem (Wund-)Gewebe. Insbesondere ein Brustimplantat ist herstellbar, wobei aufgrund angepasster Dichte, Nachgiebigkeit und Dämpfungseigenschaften des geschäumten LSR sich eine gute Verträglichkeit der Prothese mit umliegendem Körpergewebe einstellen kann.

Das Polymerformteil kann ein Beruhigungssauger oder ein Flaschensauger für Säuglinge oder Kleinkinder sein. Aufgrund angepasster Dichte, Nachgiebigkeit und Dämpfungseigenschaften des geschäumten LSR macht dieser Artikel ein natürliches Beissgefühl für den Säugling erlebbar. Neben solchen neuen Materialeigenschaften, die die Härte betreffen, ergibt sich auch ein Materialeinsatz, der wirtschaftlicher ist.

Das Polymerformteil kann auch als ein Gefäss für eine Verwendung im Haushalt ausgebildet sein. Ein solches Gefäss ist insbesondere eine Backform oder eine Gefrierschale zum Erzeugen von Eiswürfeln, bei denen die thermischen Eigenschaften verbessert sind. Auch hier liegt ein wirtschaftlicherer Materialeinsatz vor. Das frisch hergestellte Polymerformteil enthält noch störende Monomere oder andere Komponenten, die nicht reagiert haben. Mittels einer Temperung können die störenden Komponenten beseitigt werden. Aufgrund günstigerer Diffusionsbedingungen im geschäumten LSR verkürzt sich die Temperzeit.

Ein weiteres Beispiel für ein erfindungsgemässes Polymerformteil ist ein Dämpfungskörper, der sich zu einer Schwingungsdämpfung bei einem Geräusche erzeugenden Objekt (z. B. Auto) oder bei einem vibrierenden Objekt (z. B. Ventilator) eignet.

Die Polymerformteile können auch in Formen ausgebildet sein, die sich zu Dichtungszwecken oder zu einem Ausgleich von Fertigungstoleranzen eignen. Eine vergösserte Weichheit macht neue Dichtungskonzepte möglich, bei denen eine bessere Verformbarkeit nutzbar ist.

Das Polymerformteil kann auch für eine Druckwalze als ein schlauchförmiger Überzug oder eine Beschichtung ausgebildet sein, um so eine besondere drucktechnische Fläche zu erzeugen, die beispielsweise bei einem geringeren Materialeinsatz verbesserte Reibeigenschaften ermöglicht.

Das Polymer kann in Form eines Verbundstoffs, insbesondere eines Nanoverbundstoffs, verwendet werden, dem elektrisch leitfähige Additive zugegeben sind. Ein Polymerformteil mit metallischen Additiven ist als Abschirmung gegen elektromagnetische Wellen nutzbar. Es ist dabei eine Reduktion des Metallanteils im Vergleich mit bekannten Abschirmungen möglich. Mit metallischen Additiven lässt sich auch die elektrische Leitfähigkeit des Formteils erhöhen, um so elektrostatische Aufladungen verhindern zu können.

Anwendungsbereiche der genannten leitfähigen Verbundstoffe sind beispielsweise: antistatische Ausrüstung von Kunststoffen, antistatische Verpackung, elektromagnetische Abschirmung, Wärmeableitung in der Mikroelektronik, Erniedrigung von Oberflächenwiderständen aus Sicherheitsgründen beispielsweise für elektrische Betriebsmittel im Ex-Bereich.

## Patentansprüche

1. Verfahren zum Herstellen eines geschäumten Polymerformteils aus einer Flüssigsilikon-Kautschuk Formmasse, wobei die Formmasse vor einer Verarbeitung in Form von zwei getrennt gehaltenen Komponenten (A, B) vorliegt, diese Komponenten zu Beginn einer Präparierung separat in zwei Strömen unter erhöhtem Druck gefördert werden und dabei ein kontinuierliches Imprägnieren mit einem Treibmittel (C) bei beiden oder nur einer der Komponenten durchgeführt wird und nach dem Imprägnieren die beiden Ströme (32a, 32b) weiterhin unter erhöhtem Druck zusammengeführt sowie vermischt werden und schliesslich das beim Mischen gebildete reaktive Gemisch unter Absenkung des Drucks in eine beheizte Kavität eines formgebenden Werkzeugs eingespritzt wird, in dem die Formmasse simultan mit einer Vernetzungsreaktion geschäumt wird, wobei das hergestellte Polymerformteil einen Aufschäumgrad von 5 bis 70 Volumenprozent aufweist oder
die Shore-A-Härte in Bezug auf ein Polymerformteil aus nicht geschäumtem Flüssigsilikon-Kautschuk (LSR) um mindestens 10 % reduziert ist, und das hergestellte Polymerformteil einen Körper bildet, der bezüglich einer Wechselwirkung mit einem Objekt und bezüglich seiner physikalischen Eigenschaften zweckgerichtet ausgebildet ist.

2. Verfahren nach Anspruch 1, wobei das hergestellte Polymerformteil einen Aufschäumgrad von 5 bis 70 Volumenprozent aufweist und die Shore-A-Härte in Bezug auf ein Polymerformteil aus nicht geschäumtem Flüssigsilikon-Kautschuk um mindestens 10 % reduziert ist.

3. Verfahren nach Anspruch 1, wobei das Treibmittel ein physikalisches Treibmittel ist.

4. Verfahren nach Anspruch 1, wobei der Körper des Polymerformteils von Rückständen chemischer Treibmittel frei ist, sodass durch die Rückstände die physikalsichen Eigenschaften hinsichtlich physikalischer, chemischer und/oder physiologischer Aspekte nicht beeinträchtigt sind.

5. Verfahren nach Anspruch 1 oder 2, wobei das Polymerformteil ein Handgriff für ein Sport- oder Arbeitsgerät ist, wobei haptische Eigenschaften des geschäumten LSR ein den Tastsinn vorteilhaft stimulierendes Griffgefühl vermitteln und/oder modifizierte Reibeigenschaften einen sicheren Halt für eine zugreifende Hand ergeben.

6. Verfahren nach Anspruch 1 oder 2, wobei das Polymerformteil eine medizinische Prothese ist, wobei aufgrund angepasster Dichte, Nachgiebigkeit und Dämpfungseigenschaften des geschäumten Flüssigsilikon-Kautschuk sich eine gute Verträglichkeit der Prothese mit umliegendem Körpergewebe einstellt.

7. Verfahren nach Anspruch 6, wobei die medizinische Prothese ein Brustimplantat ist.

8. Verfahren nach Anspruch 1 oder 2, wobei das Polymerformteil ein Beruhigungssauger oder ein Flaschensauger für Kleinkinder und Säuglinge ist, wobei aufgrund angepasster Dichte, Nachgiebigkeit und Dämpfungseigenschaften des geschäumten Flüssigsilikon-Kautschuk ein natürliches Beissgefühl erlebbar wird.

9. Verfahren nach Anspruch 1 oder 2, wobei das Polymerformteil ein Gefäss für den Haushalt ist.

10. Verfahren nach Anspruch 9, wobei das Gefäss für den Haushalt eine Backform oder eine Gefrierschale zum Erzeugen von Eiswürfeln ist.

11. Verfahren nach Anspruch 1 oder 2, wobei das Polymerformteil ein Dämpfungskörper ist, der sich zu einer Schwingungsdämpfung bei einem Geräusche erzeugenden Objekt oder bei einem vibrierenden Objekt eignet.

12. Verfahren nach Anspruch 1 oder 2, wobei das Polymerformteil in einer Form ausgebildet ist, die sich zu Dichtungszwecken oder zu einem Ausgleich von Fertigungstoleranzen eignet.

13. Verfahren nach Anspruch 1 oder 2, wobei das Polymerformteil für eine Druckwalze als ein schlauchförmiger Überzug oder eine Beschichtung ausgebildet ist, um so eine besondere drucktechnische Fläche zu erzeugen.

14. Verfahren nach Anspruch 1 oder 2, wobei das Polymerformteil aus Flüssigsilikon-Kautschuk mit metallischen Additiven hergestellt ist, so dass das Formteil als Abschirmung gegen elektromagnetische Wellen nutzbar ist oder so dass die elektrische Leitfähigkeit des Formteils zur Verhinderung von elektrostatischen Aufladungen erhöht ist.

## Claims

1. A method for the manufacture of a foamed shaped polymer part with liquid silicone rubber as the molding composition, wherein the molding composition is present prior to processing in the form of two separately kept components (A, B), at the start of a preparation these components are conveyed separately in two streams at elevated pressure and in this connection a continuous impregnation with an expanding agent (C) is carried out in both or only in one of the components, after the impregnation the two streams (32a, 32b) are furthermore brought together and also mixed together at elevated pressure and finally, while reducing the pressure, the reactive mixture formed during mixing is injected into a heated cavity of a shape giving tool in which the molding composition is simultaneously foamed with a cross-linking reaction, wherein the manufactured shaped polymer part has a degree of foaming of from 5 to 70 % by volume or
the Shore A hardness is reduced by at least 10% with respect to a shaped polymer part of non-foamed liquid silicone rubber (LSR) and the manufactured shaped polymer part forms a body which, with regard to an interaction with an object and with regard to its physical characteristics, is designed in accordance with its purpose.

2. A method in accordance with claim 1, wherein the manufactured shaped polymer part has a degree of foaming of from 5 to 70 % by volume and the Shore A hardness is reduced by at least 10% with respect to a shaped polymer part of non-foamed liquid silicone rubber.

3. A method in accordance with claim 1, wherein the expanding agent is a physical expanding agent.

4. A method in accordance with claim 1, wherein the shape of the shaped polymer part is a body free of residues of chemical expanding agent, so that the physical characteristics with regard to physical, chemical and/or physiological aspects are not impaired by means of the residues.

5. A method in accordance with claim 1 or claim 2, wherein the shaped polymer part is a handle for a piece of sporting or working equipment, wherein haptic characteristics of the foamed LSR convey a gripping sensation which advantageously stimulates the sense of touch and/or modified friction characteristics give a secure hold for a grasping hand.

6. A method in accordance with claim 1 or claim 2, wherein the shaped polymer part is a medical prosthesis, wherein a good compatibility of the prosthesis arises with respect to the surrounding body tissue due to matched density, flexibility and damping characteristics of the foamed liquid silicone rubber.

7. A method in accordance with claim 6, wherein the medical prosthesis is a breast implant.

8. A method in accordance with claim 1 or claim 2, wherein the shaped polymer part is a pacifier or a bottle teat for toddlers and infants, wherein a natural biting sensation can be experienced as a result of matched density, flexibility and damping characteristics of the foamed liquid silicone rubber.

9. A method in accordance with claim 1 or claim 2, wherein the shaped polymer part is a container for the household.

10. A method in accordance with claim 9, wherein the container for the household is a baking mould or a freezing tray for making ice cubes.

11. A method in accordance with claim 1 or claim 2, wherein the shaped polymer part is a damping element which is suitable for oscillation damping in an object producing a noise or in a vibrating object.

12. A method in accordance with claim 1 or claim 2, wherein the shaped polymer part is made in a shape, which is suitable for sealing purposes or for the compensation of production tolerances.

13. A method in accordance with claim 1 or claim 2, wherein the shaped polymer part is formed as a tubular cover or a coating for a printing roller in order to produce a technical printing surface.

14. A method in accordance with claim 1 or claim 2, wherein the shaped polymer part made of liquid silicone rubber is manufactured with metallic additives, so that the shaped part can be used as a screen against electromagnetic waves or so that the electrical conductivity of the shaped part is raised for the prevention of electrostatic charges.

## Revendications

1. Procédé de fabrication d'une pièce moulée polymère moussée à partir d'une poudre à mouler de caoutchouc-silicone liquide, dans lequel avant le traitement, la poudre à mouler se présente sous la forme de deux composants séparés (A, B), au début d'une préparation, ces deux composants sont transportés séparément dans deux flux sous une pression accrue, et dans ce cadre, une imprégnation continue avec un agent de propulsion (C) est réalisée pour les deux ou un seul des composants, et après l'imprégnation, les deux flux (32a, 32b) sont encore acheminés conjointement sous une pression accrue et mélangés, et enfin, le mélange réactif formé au cours du mélange est injecté sous une diminution de la pression dans une cavité chauffée d'un outil de modelage, dans lequel la poudre à mouler est moussée simultanément avec une réaction de réticulation, étant entendu que la pièce moulée polymère fabriquée présente un degré de moussage de 5 à 70 pourcent de volume ou
en ce que la dureté Shore A est réduite d'au moins 10 % par rapport à une pièce moulée polymère réalisée à partir de caoutchouc-silicone liquide (LSR) non moussé, et en ce que la pièce moulée polymère fabriquée forme un corps qui est réalisé de façon conforme à sa finalité par rapport à une interaction avec un objet et par rapport à ses propriétés physiques.

2. Procédé selon la revendication 1, dans lequel la pièce moulée polymère fabriquée présente un degré de moussage de 5 à 70 pourcent de volume et la dureté Shore A est réduite d'au moins 10 % par rapport à une pièce moulée polymère réalisée à partir de caoutchouc-silicone liquide non moussé.

3. Procédé selon la revendication 1, dans lequel l'agent de propulsion est un agent de propulsion physique.

4. Procédé selon la revendication 1, dans lequel le corps de la pièce moulée polymère est exempt de résidus d'agents de propulsion chimiques, de telle sorte que les propriétés physiques ne sont pas amoindries au niveau des aspects physiques, chimiques et/ou physiologiques en raison des résidus.

5. Procédé selon la revendication 1 ou 2, dans lequel la pièce moulée polymère est une poignée pour un appareil de sport ou de travail, étant entendu que les propriétés haptiques du LSR moussé procurent une sensation de prise stimulant de façon avantageuse la sensibilité tactile et/ou les propriétés de frottement modifiées procurent une préhension sûre pour la main qui saisit la pièce.

6. Procédé selon la revendication 1 ou 2, dans lequel la pièce moulée polymère est une prothèse médicale, étant entendu qu'une bonne compatibilité de la prothèse avec les tissus corporels environnants est obtenue en raison de l'épaisseur adaptée, de l'élasticité et des propriétés d'amortissement du caoutchouc-silicone liquide moussé.

7. Procédé selon la revendication 6, dans lequel la prothèse médicale est un implant mammaire.

8. Procédé selon la revendication 1 ou 2, dans lequel la pièce moulée polymère est une tétine d'apaisement ou une tétine de biberon pour des enfants en bas âge ou des nourrissons, étant entendu qu'une sensation de succion naturelle peut être ressentie en raison de l'épaisseur adaptée, de l'élasticité et des propriétés d'amortissement du caoutchouc-silicone liquide.

9. Procédé selon la revendication 1 ou 2, dans lequel la pièce moulée polymère est une récipient pour le ménage.

10. Procédé selon la revendication 9, dans lequel le récipient pour le ménage est un moule à pâtisserie ou un plat de congélation destiné à la production de cubes de glace.

11. Procédé selon la revendication 1 ou 2, dans lequel la pièce moulée polymère est un corps d'amortissement qui est approprié en vue de l'amortissement d'une oscillation d'un objet produisant du bruit ou d'un objet vibrant.

12. Procédé selon la revendication 1 ou 2, dans lequel la pièce moulée polymère est réalisée dans une forme qui est appropriée en vue d'objectifs d'étanchéité ou en vue d'une compensation de tolérances de fabrication.

13. Procédé selon la revendication 1 ou 2, dans lequel la pièce moulée polymère est réalisée pour un rouleau plombeur sous la forme d'un couvrant en forme de tube ou d'un revêtement de façon à créer ainsi une surface de pression technique particulière.

14. Procédé selon la revendication 1 ou 2, dans lequel la pièce moulée polymère est réalisée à partir de caoutchouc-silicone liquide avec des additifs métalliques de telle sorte que la pièce moulée peut être utilisée en tant que blindage contre des ondes électromagnétiques ou de telle sorte que la conductibilité électrique de la pièce moulée est augmentée en vue de la prévention de charges électrostatiques.
